# EUROPEAN PATENT APPLICATION

(11) **EP 4 787 870 A1**
(43) Date of publication of application: **05.08.2026**
(21) Application number: 24870864.6
(22) Date of filing: 26.09.2024
(51) Int. Cl.: H04N 21/472, G06F 3/0481

(54) **MEDIA CONTENT GENERATION METHOD AND APPARATUS, ELECTRONIC DEVICE, AND READABLE STORAGE MEDIUM**

(30) Priority: 28.09.2023 CN 202311279496
(71) Applicant: Beijing Zitiao Network Technology Co., Ltd., Beijing 100190 (CN)
(72) Inventor: ZHANG, Nuomeng, Beijing 100028 (CN); YOU, Zhehao, Beijing 100028 (CN)
(74) Representative: Marks & Clerk LLP
(86) International application number: PCT/CN2024/121394
(87) International publication number: WO 2025/067324

(57) **Abstract**

Embodiments of the present disclosure provide a media content generation method and apparatus, an electronic device, and a readable storage medium. The media content generation method comprises: displaying first media content on a media content generation interface; receiving a first input for the media content generation interface, wherein the first media content is media content which is obtained by processing a target media resource on the basis of a first special effect; and in response to the first input, generating a second special effect, and displaying second media content on the media content generation interface, wherein the second media content is media content which is obtained by processing the target media resource on the basis of the second special effect.

## Description

The present application claims priority to Chinese Patent Application No. 202311279496.6, filed on September 28, 2023, which is incorporated herein by reference in its entirety as a part of the present application.

### TECHNICAL FIELD

Embodiments of the present disclosure relate to a media content generation method and apparatus, an electronic device, and a readable storage medium.

### BACKGROUND

With the advancement of image processing technology, users can perform editing operations on their self-created media resources on an editing interface. In the related art, the users are typically only able to adjust application effects of special effects, while finding it difficult to modify effect attributes of the effects themselves.

### SUMMARY

Embodiments of the present disclosure provide a media content generation method and apparatus, an electronic device, and a readable storage medium.

According to a first aspect, an embodiment of the present disclosure provides a media content generation method. The method includes: displaying first media content on a media content generation interface; receiving a first input for the media content generation interface, where the first media content is media content obtained by processing a target media resource based on a first effect; and generating a second effect and displaying second media content on the media content generation interface in response to the first input, where the second media content is media content obtained by processing the target media resource based on the second effect.

According to a second aspect, an embodiment of the present disclosure provides a media content generation apparatus. The apparatus includes: a display module configured to display first media content on a media content generation interface; a receiving module configured to receive a first input for the media content generation interface, where the first media content is media content obtained by processing a target media resource based on a first effect; and a generation module configured to generate a second effect in response to the first input, where the display module is configured to display second media content on the media content generation interface, where the second media content is media content obtained by processing the target media resource based on the second effect.

According to a third aspect, an embodiment of the present disclosure provides an electronic device. The electronic device includes a processor, a memory, and a program or instructions stored on the memory and executable on the processor, where the program or instructions, when executed by the processor, cause the steps of the method according to the first aspect to be implemented.

According to a fourth aspect, an embodiment of the present disclosure provides a readable storage medium having a program or instructions stored thereon, where the program or instructions, when executed by a processor, cause the steps of the media content generation method according to the first aspect to be implemented.

According to a fifth aspect, an embodiment of the present disclosure provides a chip. The chip includes a processor and a communication interface, where the communication interface is coupled to the processor, and the processor is configured to execute a program or instructions to implement the steps of the media content generation method according to the first aspect.

According to a sixth aspect, an embodiment of the present disclosure provides a computer program product stored in a storage medium, where the program product, when executed by at least one processor, causes the media content generation method according to the first aspect to be implemented.

### BRIEF DESCRIPTION OF DRAWINGS

FIG. 1 is a schematic flowchart of a media content generation method according to an embodiment of the present disclosure;
FIG. 2 is a first schematic diagram of a media content generation interface according to some embodiments of the present disclosure;
FIG. 3 is a second schematic diagram of a media content generation interface according to some embodiments of the present disclosure;
FIG. 4 is a third schematic diagram of a media content generation interface according to some embodiments of the present disclosure;
FIG. 5 is a fourth schematic diagram of a media content generation interface according to some embodiments of the present disclosure;
FIG. 6 is a fifth schematic diagram of a media content generation interface according to some embodiments of the present disclosure;
FIG. 7 is a sixth schematic diagram of a media content generation interface according to some embodiments of the present disclosure;
FIG. 8 is a structural block diagram of a media content generation apparatus according to an embodiment of the present disclosure;
FIG. 9 is a structural block diagram of an electronic device according to some embodiments of the present disclosure; and
FIG. 10 is a schematic structural diagram of hardware of an electronic device according to some embodiments of the present disclosure.

### DETAILED DESCRIPTION

The technical solutions in the embodiments of the present disclosure are clearly described below with reference to the accompanying drawings of the embodiments of the present disclosure. However, apparently, the embodiments described are merely some embodiments of the present disclosure rather than all the embodiments. All other embodiments obtained by those of ordinary skill in the art based on the embodiments of the present disclosure shall fall within the scope of protection of the present disclosure.

In the specification and claims of the present disclosure, the terms "first", "second", and so on are intended to distinguish between similar objects but do not indicate a specific order or sequence. It should be understood that the terms used in such contexts may be interchangeable under appropriate circumstances, such that the embodiments of the present disclosure can be implemented in an order other than those illustrated or described herein. Moreover, objects distinguished by "first", "second", and so on are generally of the same category, and such terms do not limit the quantity of objects. For example, a first object may refer to one object or multiple objects. In addition, in the specification and claims, "and/or" indicates at least one of the connected objects, and the character "/" generally indicates an "or" relationship between the associated objects.

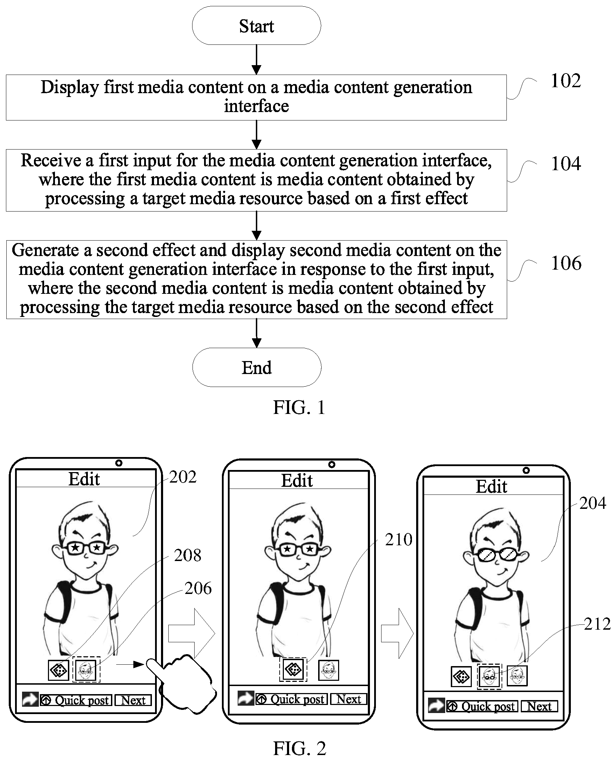

A media content generation method, a media content generation apparatus, an electronic device, and a readable storage medium according to embodiments of the present disclosure are described in detail below through specific embodiments and application scenarios thereof with reference to FIGs. 1 to 10.

In an embodiment of the present disclosure, there is provided a media content generation method. FIG. 1 is a schematic flowchart of a media content generation method according to an embodiment of the present disclosure. As shown in FIG. 1, the media content generation method includes the following steps.

Step 102: Display first media content on a media content generation interface.

Step 104: Receive a first input for the media content generation interface, where the first media content is media content obtained by processing a target media resource based on a first effect.

In this embodiment of the present disclosure, the media content generation interface includes an editing interface and a photographing interface. A user can capture the target media resource on the photographing interface and can edit the target media resource on the editing interface. The target media resource may be content captured by the user, or content uploaded by the user. For example, the target media resource may be an image resource, a video resource, or the like.

In this embodiment of the present disclosure, the user can add an effect to the target media resource on the media content generation interface, or perform other processing on the target media resource on the media content generation interface. The first media content displayed on the media content generation interface is the media content obtained by processing the target media resource using the first effect.

For example, the target media resource is an image resource, the first effect is an image effect added to the image resource, and the first media content is an image resource with the effect added. The first effect is an effect generated based on an effect style and an effect keyword configured by the user. The user can edit the effect style, the effect keyword, and other information in the first effect.

Step 106: Generate a second effect and display second media content on the media content generation interface in response to the first input, where the second media content is media content obtained by processing the target media resource based on the second effect.

It should be noted that the first effect and the second effect are effects used to process the target media resource. The effects may include at least one of a prop, a template, a filter, or a sticker.

In this embodiment of the present disclosure, the first input is an operational input of the user for the media content generation interface. The new second effect can be generated through the first input, and the processing is switched from the processing of the target media resource using the first effect to the processing of the target media resource using the second effect. The second media content obtained after processing the target resource using the second effect is displayed on the media content generation interface.

In this embodiment of the present disclosure, when the media content generation interface displays the first media content generated by processing the target media resource using the first effect, the new effect can be generated by performing the first input for the media content generation interface. The processing can be switched to the processing of the target media resource using the second effect, and the second media content obtained by the processing is displayed on the media content generation interface.

In this embodiment of the present disclosure, when the media content generation interface is displaying the target media resource to which an effect has been added, the user can perform the first input for the media content generation interface to quickly and conveniently generate an effect and adjust the effect added to the target media resource, thereby simplifying user operations.

In some embodiments of the present disclosure, generating the second effect in response to the first input includes:
generating the second effect based on at least one preset keyword in response to the first input, where the preset keyword is a keyword used to generate the first effect.

In the embodiments of the present disclosure, the first input performed by the user for the media content generation interface is used to trigger the generation of the second effect different from the first effect based on the preset keyword. The preset keyword is the same as the keyword used to generate the first effect.

It is understood that in generating the second effect, a corresponding effect style and a corresponding effect keyword are required. The second effect is generated by configuring the corresponding preset keyword of the second effect as the keyword used for the first effect and based on the determined effect style.

For example, the effect style of the second effect may be a randomly generated effect style, or may be a style that is the same as or similar to the style of the first effect. The style of the first effect may be an effect style edited by the user in advance, or may be a target effect style selected by the user in advance from a plurality of effect styles. It should be noted that once the user determines an effect style, an effect model corresponding to the effect style can be determined. After the user determines the preset keyword, the effect model is adjusted based on information of the effect keyword. When the generation of a new effect is triggered, an effect model corresponding to the newly created effect is determined.

In the embodiments of the present disclosure, the user may determine the preset keyword to be used to generate the first effect before the first media content is generated. The user triggers the generation of the new second effect based on the keyword used for the first effect by performing the first input for the media content generation interface, and an identifier of the new second effect may be presented. Since the second media content and the first media content use the same target media resource and the preset keyword used for the second effect is the same as the keyword used for the first effect, there is a correlation between the generated second media content and the first media content, but there is a difference in presentation effects of the second media content and the first media content, such as a difference in stylization intensity. It is understood that the stylization intensity refers to an extent to which the style of the effect is applied to the current target media resource. For example, when the effect style is a comic style, in a case where the target media resource includes a real-world object, such as an animal or a human, a higher stylization intensity will result in generated media content images that appears more like a comic illustration and less like the real-world object.

In some embodiments of the present disclosure, the preset keyword is configured by the current user through an input operation.

In the embodiments of the present disclosure, the user can configure the preset keyword through the input operation. For example, the user may configure the preset keyword by inputting a text, or configure the preset keyword by selecting a corresponding target option from preset options.

In the embodiments of the present disclosure, the user can configure the preset keyword through an operational input, such that the user can obtain the effect generated based on the preset keyword according to an actual demand, and that the generated second effect satisfies the user's demand.

In some embodiments of the present disclosure, receiving the first input for the media content generation interface includes:
receiving the first input for an identifier presentation region, where the first input is used to update an identifier display position within the identifier presentation region, and the identifier presentation region is used to display an identifier set, the identifier set including a first identifier and a target identifier, and the first identifier being associated with the first effect; and
generating the second effect and displaying the second media content on the media content generation interface in response to the first input includes:
   displaying, in response to the first input, the second media content on the media content generation interface based on the target identifier being moved to a preset display position.

In the embodiments of the present disclosure, when the media content generation interface displays the first media content, the media content generation interface further displays the first identifier. The first identifier corresponds to the first effect in the first media content, that is, the first identifier is used to present the first effect corresponding to the currently displayed first media content.

In the embodiments of the present disclosure, the first identifier is an identifier corresponding to the first effect, and the user can invoke the first effect through the first identifier. The first input is an operational input for updating the identifier display position in the identifier presentation region. For example, the first input may be an operational input such as a swipe input performed by the user on the identifier presentation region.

For example, the identifier set displayed in the identifier presentation region further includes other identifiers in addition to the first identifier and the target identifier, which may be used to invoke other effects that have been generated.

In the embodiments of the present disclosure, the preset display position is a display position in the identifier presentation region. When the user moves the identifier display position in the identifier presentation region through the first input, when the target identifier is moved to the preset display position, the operation of processing the target media resource using the second effect is triggered, and the second media content obtained by the processing is displayed on the media content generation interface.

FIG. 2 is a first schematic diagram of a media content generation interface according to some embodiments of the present disclosure. As shown in FIG. 2, a label presentation region of the media content generation interface displays a first effect image 202, as well as a first identifier 206 corresponding to the first effect in the first effect image 202, and a target identifier 208. The user drags the label presentation region until the target identifier 208 is moved to a preset display position 210 for display, and then the media content generation interface displays a second effect image 204 and a second identifier 212 corresponding to the second effect. The first effect image 202 is first media content, the second effect image 204 is second media content, and the user dragging the label presentation region constitutes the first input.

In the embodiments of the present disclosure, the user can adjust a display position of the target identifier in the identifier presentation region by performing the first input for the identifier presentation region. After the target identifier is moved to the preset display position, the operation of processing the original target media resource based on the new second effect is triggered, so as to obtain the second media content, and the second media content is displayed on the media content generation interface, thereby further simplifying the operation for the user to update the effect.

In some embodiments of the present disclosure, the target identifier being moved to the preset display position includes: the target identifier at least partially overlapping a selected-state identifier displayed at the preset display position.

In the embodiments of the present disclosure, the media content generation interface further displays the selected-state identifier, and a position of the selected-state identifier is the preset display position.

For example, the selected-state identifier at least partially overlaps the first identifier before the user performs the first input, and in response to the first input performed by the user, the selected-state identifier at least partially overlaps the target identifier.

In the embodiments of the present disclosure, while the user moves the identifier display position within the identifier presentation region through the first input, in response to the target identifier at least partially overlapping the selected-state identifier, it is determined that the target identifier has been moved to the preset display position, and the process of processing the target media resource using the second effect is triggered, and the second media content obtained by the processing is displayed on the media content generation interface.

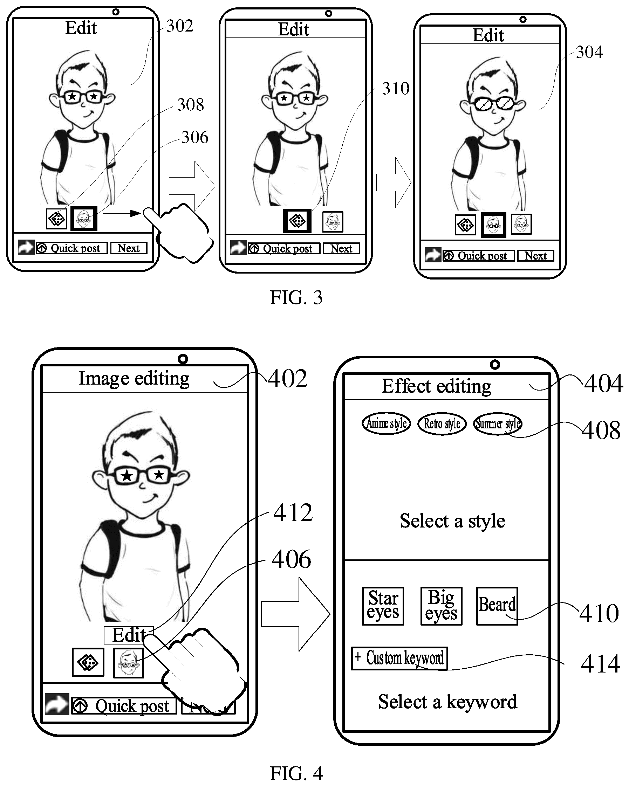

FIG. 3 is a second schematic diagram of a media content generation interface according to some embodiments of the present disclosure. As shown in FIG. 3, a label presentation region of the media content generation interface displays a first effect image 302, a first identifier 306 corresponding to the first effect in the first effect image 302, a target identifier 308, and a selected-state identifier 310. The user drags the label presentation region until the target identifier 308 is moved to overlap the selected-state identifier 310 for display, and then the media content generation interface displays a second effect image 304. An original image is a target media resource uploaded by the user, the first effect image 302 is first media content, the second effect image 304 is second media content, and the user dragging the label presentation region constitutes the first input.

In the embodiments of the present disclosure, by displaying the selected-state identifier in the label presentation region, it is convenient for the user to determine the preset display position on the media content generation interface, enabling the user to conveniently move the target identifier to the preset display position. Moreover, the target media resource can be processed using the second effect once the target identifier partially overlaps the selected-state identifier, thereby further simplifying the operation steps for the user to trigger the update of the media effect, and reducing the occurrence of situations where user misoperations prevent timely triggering of effect updates.

In some embodiments of the present disclosure, the first input for the identifier presentation region is a swipe operation on the identifier presentation region.

In the embodiments of the present disclosure, the user performs the first input for the identifier presentation region by means of a swipe input, such that the movement direction of the identifier display position in the identifier presentation region is the same as the swipe direction, thereby further simplifying the operation process for the user.

In some embodiments of the present disclosure, the media content generation method further includes:
receiving a second input for the first identifier or an edit control associated with the first identifier; and
displaying an effect editing interface in response to the second input, where the effect editing interface includes a style control and a keyword input control,
where the style control is used to determine an effect style of the first effect, and the keyword input control is used to update an effect keyword of the first effect.

In the embodiments of the present disclosure, the user can edit and update the first effect for processing the target media resource. It should be noted that the effect is a media effect generated based on the effect style and the effect keyword configured by the user.

In the embodiments of the present disclosure, the first identifier is used to present the first effect corresponding to the currently displayed first media content. By performing the second input for the first identifier, the user can navigate to the effect editing interface. Alternatively, the edit control is displayed in a display region corresponding to the first identifier. By performing the second input for the edit control, the user navigates to the effect editing interface.

The effect editing interface displays the style control and the keyword input control. By performing an operational input for the style control, the user can switch the effect style of the first effect, and by performing an operational input for the keyword input control, the user can update the effect keyword of the first effect.

FIG. 4 is a third schematic diagram of a media content generation interface according to some embodiments of the present disclosure. As shown in FIG. 4, a media content generation interface 402 displays a first effect image, as well as an effect identifier 406 corresponding to the effect in the first effect image, and an edit button 412 associated with the effect identifier 406. The user taps the edit button 412 on the media content generation interface 402 to navigate to and display the effect editing interface 404. The effect editing interface 404 displays a style presentation page and a keyword presentation page. The style presentation page displays a plurality of style labels 408, and the user can select from the plurality of style labels 408. The keyword presentation page displays a plurality of keyword labels 410 and a custom keyword button 414, and the user can select among the plurality of keyword labels 410, or invoke a keyword input control by triggering the custom keyword button 414, so as to input a custom keyword through the keyword input control. The first effect image is first media content, the effect identifier 406 is a first identifier, the style label 408 in the style presentation page is a style control, and the keyword label 410 in the keyword presentation page is the keyword input control.

For example, the keyword input control may also be a virtual keyboard, and the user can input a desired effect keyword through the virtual keyboard.

For example, the keyword input control may also be a virtual microphone button. By long-pressing the virtual microphone button, the user can record a speech to extract an effect keyword from the speech.

In the embodiments of the present disclosure, by performing the second input for the first identifier on the media content generation interface, the user can trigger a navigation to and display of the effect editing interface, and the user can edit the first effect corresponding to the first identifier on the effect editing interface. This allows the user to quickly navigate to the effect editing interface from the media content generation interface when the user needs to update the existing effect, thereby simplifying the operation for the user to edit the existing effect.

In some embodiments of the present disclosure, during the process of generating the second effect and displaying the second media content on the media content generation interface in response to the first input, the method further includes:
displaying at least one second identifier on the media content generation interface in response to the first input, where the second identifier is associated with the second effect.

In the embodiments of the present disclosure, when the user updates the first effect used to process the target media resource to the second effect through the first input on the media content generation interface, the media content generation interface displays the second identifier corresponding to the second effect.

For example, by performing the second input for the second identifier, the user can navigate to the effect editing interface corresponding to the second effect to update the second effect.

For example, the user moves the second identifier to a preset display position through the first input, and this action can trigger the replacement of the second effect in the second media content with another effect.

In the embodiments of the present disclosure, the media content generation interface displays the first identifier and the second identifier, with the first identifier corresponding to the first effect and the second identifier corresponding to the second effect. By performing an operational input for the first identifier, the user can quickly switch to display of the first media content on the media content generation interface. By performing an operational input for the second identifier, the user can quickly switch to display of the second media content on the media content generation interface.

As shown in FIG. 2, with the media content generation interface displaying the second effect image 204, the second identifier 212 matching the second effect is displayed.

In the embodiments of the present disclosure, during the display of the post-update second media content, the media content generation interface displays the second identifier matching the second effect, enabling the user to keep abreast of the effect corresponding to the current second media content through the second identifier, navigate to an interface for processing the second effect through the second identifier, and trigger an operation of re-updating the effect for the second media content through the second identifier.

In some embodiments of the present disclosure, displaying the at least one second identifier on the media content generation interface includes at least one of:
adding display of the at least one second identifier on the media content generation interface; or
canceling display of the first identifier on the media content generation interface, and switching to display of the at least one second identifier.

In the embodiments of the present disclosure, the second identifier is an identifier corresponding to the second effect. By triggering the second identifier through an operational input, the user can invoke the second media content obtained by processing based on the second effect.

In the embodiments of the present disclosure, by adding the display of the at least one second identifier on the basis of retention of the display of the original first identifier, the user can trigger the first identifier to invoke the corresponding first media content, and trigger the second identifier to invoke the corresponding second media content. That is, with the media content generation interface displaying the second media content, the first media content and the corresponding first identifier are retained, which facilitates subsequent invocation by the user at any time.

In the embodiments of the present disclosure, by canceling the display of the original first identifier and switching to the display of the at least one second identifier, the user can only trigger the second identifier to invoke the corresponding second media content. That is, with the media content generation interface displaying the second media content, the first media content is deleted, and the display of the corresponding first identifier is canceled. This allows the pre-update media content to be deleted conveniently, and the identifier displayed on the media generation interface to be deleted in a timely manner, resulting in a more concise layout on the media generation interface.

It should be noted that the user can select between the two modes described above on a setup interface.

In some embodiments of the present disclosure, after generating the second effect and displaying the second media content on the media content generation interface in response to the first input, the method further includes:
with the media content generation interface displaying the first identifier, receiving a fourth input for the first identifier, where the first identifier is associated with the first effect; and
displaying the first media content on the media content generation interface in response to the fourth input.

In the embodiments of the present disclosure, after the user updates the first media content to the second media content by performing the first input, the pre-update first media content is stored. When the user performs the fourth input for the first identifier, the media content generation interface can redisplay the pre-update first media content.

In the embodiments of the present disclosure, after the user updates the first media content to the second media content by updating the effect through the first input, the media content generation interface displays the first identifier. The user can trigger redisplay of the pre-update first media content on the media content generation interface through the first identifier. This allows the user to quickly retrieve the pre-update media content when the user is dissatisfied with the second media content.

In some embodiments of the present disclosure, the second effect matches the first effect in style category.

In the embodiments of the present disclosure, the second effect and the first effect may be effects of the same style category. The effects of the same style category include a plurality of media effects of the same style. After the user triggers the first input, a media effect of the same style is used as the second effect to replace the first effect in the first media content, so as to obtain the second media content through the update.

In the embodiments of the present disclosure, the first effect and the second effect are effects of the same style category, such that the user can conveniently switch from the first media content to the second media content of the matching style.

In some embodiments of the present disclosure, the second effect is different from the first effect in stylization intensity.

It should be noted that the higher the stylization intensity of an effect, the greater a difference between the media content obtained by processing the target media resource based on the effect and the original target media resource.

In the embodiments of the present disclosure, the first effect matches the second effect in style category, and the first effect is different from the second effect in stylization intensity, such that the user can conveniently switch from the first media content to the second media content of the same style but different stylization intensity, that is, the user can quickly adjust the stylization intensity used for processing the target media resource.

In some embodiments of the present disclosure, the first effect matches a first style category, the second effect matches a second style category, and/or the first effect is different from the second effect in stylization intensity.

In the embodiments of the present disclosure, the first style category corresponding to the first effect is different from the second style category of the second effect, that is, the effect style corresponding to the first media content is different from the effect style corresponding to the second media content, such that the user can conveniently switch from the first media content to the second media content of the different effect style through the first input.

In the embodiments of the present disclosure, the first effect is different from the second effect in stylization intensity, that is, the first media content and the second media content exhibit varying degrees of similarity to the target media resource, such that the user can conveniently switch from the first media content to the second media content of different stylization intensity through the first input.

In the embodiments of the present disclosure, the first effect is different from the second effect both in stylization intensity and in style category, such that the user can make more substantial adjustments to the effect corresponding to the target media resource through the first input.

In some embodiments of the present disclosure, in response to the first input, generating the second effect, and displaying the second media content on the media content generation interface includes:
determining a second style category and a preset keyword for the second effect;
generating the second effect based on the second style category and the preset keyword; and
generating and displaying the second media content based on the second effect and the target media resource.

In the embodiments of the present disclosure, the second media content is media content obtained by processing the target media resource based on the second effect. Therefore, the corresponding second effect needs to be generated before the second media content is generated and displayed. The second effect is an effect obtained based on the second style category and the preset keyword.

For example, after the user triggers the first input, the corresponding second style category and preset keyword are determined, and the second effect is generated based on the second style category and the preset keyword. Both the second style category and the preset keyword may be configured manually by the user or may be generated automatically by the system.

In the embodiments of the present disclosure, by performing the first input for the media content generation interface, the user can trigger the generation of the second effect and processing of the target media resource based on the second effect, without requiring the user to exit the current interface for operation, thereby further simplifying user operations.

In some embodiments of the present disclosure, the second style category is the same as the first style category of the first effect, and/or the second style category is determined randomly.

In the embodiments of the present disclosure, in a case where the second style category is the same as the first style category, the corresponding second effect is generated by adjusting the preset keyword corresponding to the second effect, such that the effect style of the second media content is similar to the effect style of the first media content.

In the embodiments of the present disclosure, in a case where the second style category is determined randomly, the system may randomly select any one of the existing style categories as the second style category for generating the second effect. This allows the user to quickly generate the second media content of an effect style that differs significantly from the effect style of the first media content.

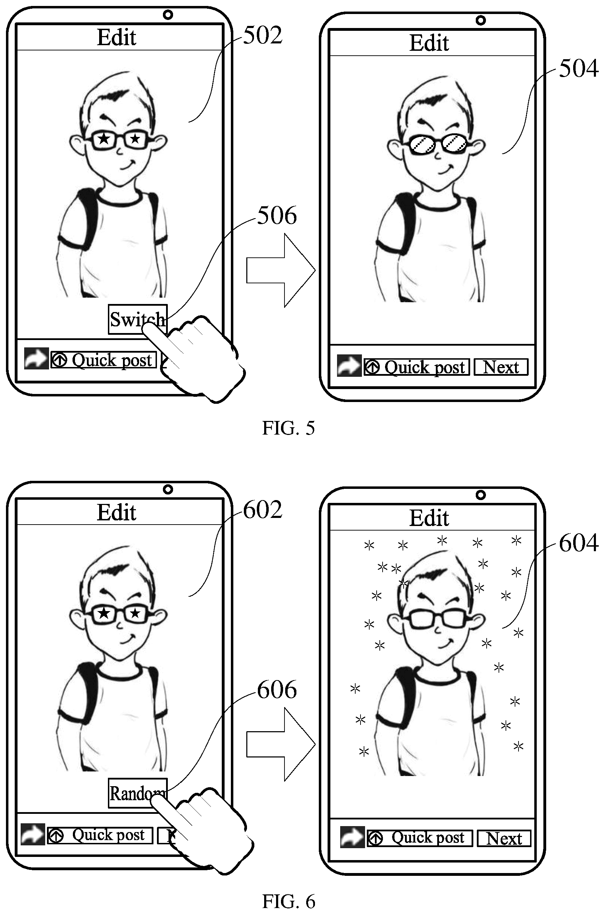

FIG. 5 is a fourth schematic diagram of a media content generation interface according to some embodiments of the present disclosure. As shown in FIG. 5, the media content generation interface displays a first effect image 502 and a "Switch" button 506. The first effect image 502 is an effect image obtained by adding a first effect to an original image uploaded by the user. When the user taps the "Switch" button 506, the media content generation interface displays a second effect image 504. The second effect image 504 is an effect image obtained by adding a second effect to the original image uploaded by the user. The second effect and the first effect are effects of the same effect style. The original image is a target media resource uploaded by the user, the first effect image 502 is first media content, and the second effect image 504 is second media content.

FIG. 6 is a fifth schematic diagram of a media content generation interface according to some embodiments of the present disclosure. As shown in FIG. 6, the media content generation interface displays a first effect image 602 and a "Random" button 606. The first effect image 602 is an effect image obtained by adding a first effect to an original image uploaded by the user. When the user taps the "Random" button 606, the media content generation interface displays a second effect image 604. The second effect image 604 is an effect image obtained by adding a second effect to the original image uploaded by the user, and the second effect is an effect using a randomly generated style category. The second effect and the first effect are effects of different effect styles. The original image is a target media resource uploaded by the user, the first effect image 602 is first media content, and the second effect image 604 is second media content.

In some embodiments of the present disclosure, in response to the first input, generating the second effect, and displaying the second media content on the media content generation interface includes:
in response to the first input, displaying the target media resource and a progress display control on the media content generation interface, where the progress display control is used to display a generation progress of the second media content; and
switching to display of the second media content on the media content generation interface in response to the progress display control being displayed in a preset state.

In the embodiments of the present disclosure, after the user performs the first input for the media content generation interface and before the media content generation interface displays the post-update second media content, the media content generation interface displays the original target media resource, and the progress display control used to display the generation progress of the second media content, so as to prompt the user of the progress of generation of the second media content. The progress display control being displayed in the preset state indicates successful generation of the second media content, at which point the second media content is displayed on the media content generation interface.

For example, the preset state includes a progress bar displayed in the progress display control reaching 100% complete.

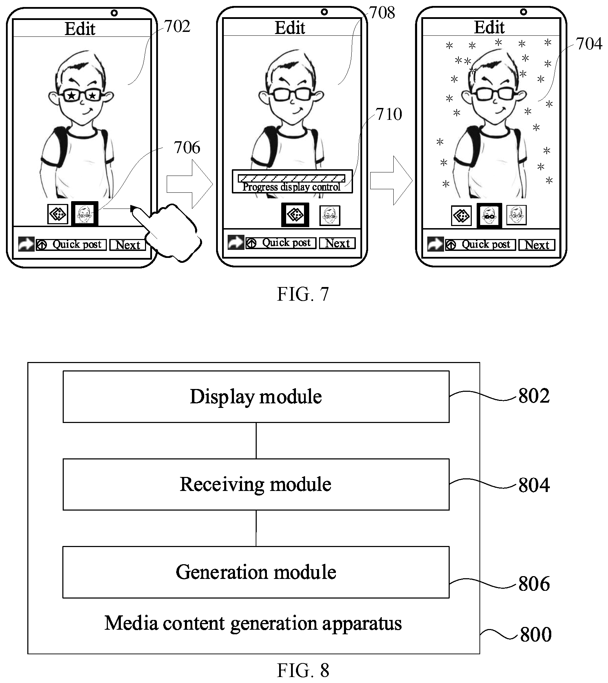

FIG. 7 is a sixth schematic diagram of a media content generation interface according to some embodiments of the present disclosure. As shown in FIG. 7, the media content generation interface displays a first effect image 702 and an effect identifier 706. The first effect image 702 is an effect image obtained by adding a first effect to an original image 708 uploaded by the user. The user drags the effect identifier 706 to a preset display position, at which point the media content generation interface displays the original image 708 and a progress display control 710. After the progress bar in the progress display control 710 reaches 100% complete, the media content generation interface displays a second effect image 704. The second effect image 704 is an effect image obtained by adding a second effect to the original image 708 uploaded by the user. The original image 708 is a target media resource uploaded by the user, the first effect image 702 is first media content, the second effect image 704 is second media content, the effect identifier 706 is a first identifier, and the user dragging the effect identifier 706 to the preset display position constitutes a first input.

For example, the progress display control is displayed floating over the target media resource.

In the embodiments of the present disclosure, during the generation of the second media content, the media content generation interface displays the original target media resource and the progress display control, so as to inform the user in a timely manner of detailed current progress of generation of the second media content.

In some embodiments of the present disclosure, there is provided a media content generation apparatus. FIG. 8 is a structural block diagram of a media content generation apparatus according to an embodiment of the present disclosure. As shown in FIG. 8, the media content generation apparatus 800 includes:
a display module 802 configured to display first media content on a media content generation interface;
a receiving module 804 configured to receive a first input for the media content generation interface, where the first media content is media content obtained by processing a target media resource based on a first effect; and
a generation module 806 configured to generate a second effect in response to the first input, where the display module 802 is configured to display second media content on the media content generation interface, where the second media content is media content obtained by processing the target media resource based on the second effect.

In the embodiments of the present disclosure, when the media content generation interface displays the target media resource to which an effect has been added, a user can perform the first input for the media content generation interface to conveniently generate an effect and adjust the effect added to the target media resource, thereby simplifying user operations.

In some embodiments of the present disclosure, the generation module 806 is configured to generate, in response to the first input, the second effect based on at least one preset keyword, where the preset keyword is a keyword used to generate the first effect.

In the embodiments of the present disclosure, the user triggers the generation of the new second effect based on the keyword used for the first effect by performing the first input for the media content generation interface. Since the second media content and the first media content use the same target media resource and the preset keyword used for the second effect matches the keyword used for the first effect, there is a certain degree of similarity between the generated second media content and the first media content.

In some embodiments of the present disclosure, the preset keyword is configured by the current user through an input operation.

In the embodiments of the present disclosure, the user can configure the preset keyword through the input operation. For example, the user may configure the preset keyword by inputting a text, or configure the preset keyword by selecting a corresponding target option from preset options.

In the embodiments of the present disclosure, the user can configure the preset keyword through an operational input, such that the user can configure the preset keyword in the second effect according to an actual demand, thereby ensuring that the generated second effect satisfies the user's demand.

In some embodiments of the present disclosure, the receiving module 804 is configured to receive the first input for an identifier presentation region, where the first input is used to update an identifier display position within the identifier presentation region, and the identifier presentation region is used to display an identifier set, the identifier set including a first identifier and a target identifier, and the first identifier being associated with the first effect.

The display module 802 is configured to display, in response to the first input, the second media content on the media content generation interface based on the target identifier being moved to a preset display position.

In the embodiments of the present disclosure, the user can adjust a display position of the target identifier in the identifier presentation region by performing the first input for the identifier presentation region. After the target identifier is moved to the preset display position, the operation of processing the original target media resource based on the new second effect is triggered, so as to obtain the second media content, and the second media content is displayed on the media content generation interface, thereby further simplifying the operation for the user to update the effect for the target media resource that has been configured with an effect.

In some embodiments of the present disclosure, the target identifier being moved to the preset display position includes: the target identifier at least partially overlapping a selected-state identifier displayed at the preset display position.

In the embodiments of the present disclosure, by displaying the selected-state identifier in a label presentation region, it is convenient for the user to determine the preset display position on the media content generation interface, enabling the user to conveniently move the target identifier to the preset display position. Moreover, the target media resource can be processed using the second effect once the target identifier partially overlaps the selected-state identifier, thereby further simplifying the operation steps for the user to trigger the update of the media effect, and reducing the occurrence of situations where user misoperations prevent timely triggering of effect updates.

In some embodiments of the present disclosure, the first input for the identifier presentation region is a swipe operation on the identifier presentation region.

In the embodiments of the present disclosure, the user performs the first input for the identifier presentation region by means of a swipe input, such that the movement direction of the identifier display position in the identifier presentation region is the same as the swipe direction, thereby further simplifying the operation process for the user.

In some embodiments of the present disclosure, the receiving module 804 is configured to receive a second input for the first identifier or an edit control associated with the first identifier.

The display module 802 is configured to display an effect editing interface in response to the second input, where the effect editing interface includes a style control and a keyword input control, where the style control is used to determine an effect style of the first effect, and the keyword input control is used to update an effect keyword of the first effect.

In the embodiments of the present disclosure, by performing the second input for the first identifier on the media content generation interface, the user can trigger a navigation to and display of the effect editing interface, and the user can edit the first effect corresponding to the first identifier on the effect editing interface. This allows the user to quickly navigate to the effect editing interface from the media content generation interface when the user needs to update the existing effect, thereby simplifying the operation for the user to edit the existing effect.

In some embodiments of the present disclosure, the display module 802 is configured to display at least one second identifier on the media content generation interface in response to the first input, where the second identifier is associated with the second effect.

In the embodiments of the present disclosure, during the display of the post-update second media content, the media content generation interface displays the second identifier matching the second effect, enabling the user to keep abreast of the effect corresponding to the current second media content through the second identifier, navigate to an interface for editing the second effect through the second identifier, and trigger an operation of re-updating the effect for the second media content through the second identifier.

In some embodiments of the present disclosure, the display module 802 is configured to add display of the at least one second identifier on the media content generation interface.

The display module 802 is configured to cancel display of the first identifier on the media content generation interface and switch to display of the at least one second identifier.

In the embodiments of the present disclosure, by adding the display of the at least one second identifier on the basis of retention of the display of the original first identifier, the user can trigger the first identifier to invoke the corresponding first media content, and trigger the second identifier to invoke the corresponding second media content. That is, with the media content generation interface displaying the second media content, the first media content and the corresponding first identifier are retained, which facilitates subsequent invocation by the user at any time.

In the embodiments of the present disclosure, by canceling the display of the original first identifier and switching to the display of the at least one second identifier, the user can only trigger the second identifier to invoke the corresponding second media content. That is, with the media content generation interface displaying the second media content, the first media content is deleted, and the display of the corresponding first identifier is canceled. This allows the pre-update media content to be deleted conveniently, and the identifier displayed on the media generation interface to be deleted in a timely manner, resulting in a more concise layout on the media generation interface.

In some embodiments of the present disclosure, the display module 802 is configured to display the first identifier on the media content generation interface.

The receiving module 804 is configured to receive a fourth input for the first identifier, where the first identifier is associated with the first effect.

The display module 802 is configured to display the first media content on the media content generation interface in response to the fourth input.

In the embodiments of the present disclosure, after the user updates the first media content to the second media content by updating the effect through the first input, the media content generation interface displays the first identifier. The user can trigger redisplay of the pre-update first media content on the media content generation interface through the first identifier. This allows the user to quickly retrieve the pre-update media content when the user is dissatisfied with the second media content.

In some embodiments of the present disclosure, the second effect matches the first effect in style category.

In the embodiments of the present disclosure, the first effect and the second effect are effects of the same style category, such that the user can conveniently switch from the first media content to the second media content of the matching style.

In some embodiments of the present disclosure, the second effect is different from the first effect in stylization intensity.

In the embodiments of the present disclosure, the first effect matches the second effect in style category, and the first effect is different from the second effect in stylization intensity, such that the user can conveniently switch from the first media content to the second media content of the same style but different stylization intensity, that is, the user can quickly adjust the stylization intensity used for processing the target media resource.

In some embodiments of the present disclosure, a determination module is configured to determine a second style category and a preset keyword for the second effect.

The generation module 806 is configured to generate the second effect based on the second style category and the preset keyword.

The generation module 806 is configured to generate and display the second media content based on the second effect and the target media resource.

In the embodiments of the present disclosure, by performing the first input for the media content generation interface, the user can trigger actions of generating the second effect and processing the target media resource based on the second effect, without requiring the user to exit the current interface for operation, thereby further simplifying user operations.

In some embodiments of the present disclosure, the second style category is the same as a first style category of the first effect, and/or the second style category is determined randomly.

In the embodiments of the present disclosure, in a case where the second style category is the same as the first style category, the corresponding second effect is generated by adjusting the preset keyword corresponding to the second effect, such that an effect style of the second media content is similar to the effect style of the first media content.

In the embodiments of the present disclosure, in a case where the second style category is determined randomly, the system may randomly select any one of the existing style categories as the second style category for generating the second effect. This allows the user to quickly generate the second media content of an effect style that differs significantly from the effect style of the first media content.

In some embodiments of the present disclosure, the display module 802 is configured to display the target media resource and a progress display control on the media content generation interface in response to the first input, where the progress display control is used to display a generation progress of the second media content.

The display module 802 is configured to switch to display of the second media content on the media content generation interface in response to the progress display control being displayed in a preset state.

In the embodiments of the present disclosure, during the generation of the second media content, the media content generation interface displays the original target media resource and the progress display control, so as to inform the user in a timely manner of detailed current progress of generation of the second media content.

The media content generating apparatus in the embodiments of the present disclosure may be an electronic device or a component in the electronic device, such as an integrated circuit or a chip. The electronic device may be a terminal device or another device other than the terminal device. For example, the electronic device may be a mobile phone, a tablet computer, a notebook computer, a palm computer, a vehicle-mounted electronic device, a mobile Internet device (MID), an augmented reality (AR)/virtual reality (VR) device, a robot, a wearable device, an ultra-mobile personal computer (UMPC), a netbook, a personal digital assistant (PDA), etc., or may be a server, network attached storage (NAS), a personal computer (PC), a television (TV), a teller machine, a self-service machine, etc., which is not specifically limited in the embodiments of the present disclosure.

The media content generation apparatus in the embodiments of the present disclosure may be an apparatus that has an operating system. The operating system may be an Android operating system, an iOS operating system, or another possible operating system, which is not specifically limited in the embodiments of the present disclosure.

The media content generation apparatus provided in the embodiments of the present disclosure can implement various processes implemented in the method embodiments described above. In order to avoid repetition, details are not described herein again.

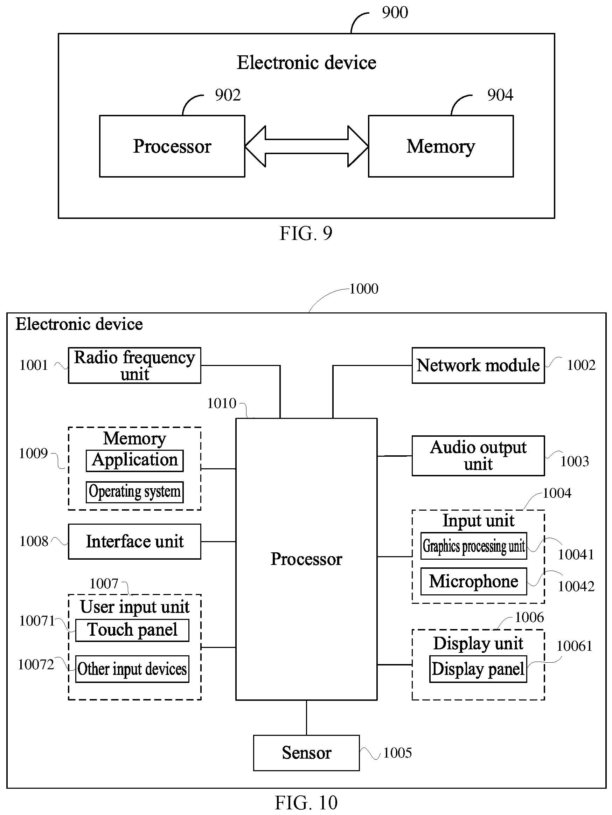

Optionally, an embodiment of the present disclosure further provides an electronic device. FIG. 9 is a structural block diagram of an electronic device according to some embodiments of the present disclosure. As shown in FIG. 9, the electronic device 900 includes a processor 902 and a memory 904. The memory 904 has a program or instructions executable on the processor 902 stored thereon, where the program or instructions, when executed by the processor 902, cause the steps of the method embodiments described above to be implemented, and can achieve the same technical effects. In order to avoid repetition, details are not described herein again.

It should be noted that the electronic device in the embodiments of the present disclosure includes the mobile electronic devices and the non-mobile electronic devices as described above.

FIG. 10 is a schematic structural diagram of hardware of an electronic device according to some embodiments of the present disclosure.

The electronic device 1000 includes, but is not limited to: a radio frequency unit 1001, a network module 1002, an audio output unit 1003, an input unit 1004, a sensor 1005, a display unit 1006, a user input unit 1007, an interface unit 1008, a memory 1009, a processor 1010, and other components.

It is understood by those skilled in the art that the electronic device 1000 may further include a power source (such as a battery) that provides power to the components. The power source may be logically connected to the processor 1010 through a power management system, to realize management of charging and discharging, power consumption management, and other functions through the power management system. The structure of the electronic device shown in FIG. 10 does not constitute a limitation on the electronic device. The electronic device may include more or fewer components than those shown in the figure, or combine some components, or adopt different component arrangements. Details are not described herein again.

The display unit 1006 is configured to display first media content on a media content generation interface.

The user input unit 1007 is configured to receive a first input for the media content generation interface, where the first media content is media content obtained by processing a target media resource based on a first effect.

The processor 1010 is configured to generate a second effect in response to the first input.

The display unit 1006 is configured to display second media content on the media content generation interface, where the second media content is media content obtained by processing the target media resource based on the second effect.

In the embodiments of the present disclosure, when the media content generation interface displays the target media resource to which an effect has been added, a user can perform the first input for the media content generation interface to conveniently generate an effect and adjust the effect added to the target media resource, thereby simplifying user operations.

In some embodiments of the present disclosure, the processor 1010 is configured to generate, in response to the first input, the second effect based on at least one preset keyword, where the preset keyword is a keyword used to generate the first effect.

In the embodiments of the present disclosure, the user triggers the generation of the new second effect based on the keyword used for the first effect by performing the first input for the media content generation interface. Since the second media content and the first media content use the same target media resource and the preset keyword used for the second effect matches the keyword used for the first effect, there is a certain degree of similarity between the generated second media content and the first media content.

In some embodiments of the present disclosure, the preset keyword is configured by the current user through an input operation.

In the embodiments of the present disclosure, the user can configure the preset keyword through the input operation. For example, the user may configure the preset keyword by inputting a text, or configure the preset keyword by selecting a corresponding target option from preset options.

In the embodiments of the present disclosure, the user can configure the preset keyword through an operational input, such that the user can configure the preset keyword in the second effect according to an actual demand, thereby ensuring that the generated second effect satisfies the user's demand.

In some embodiments of the present disclosure, the user input unit 1007 is configured to receive the first input for an identifier presentation region, where the first input is used to update an identifier display position within the identifier presentation region, and the identifier presentation region is used to display an identifier set, the identifier set including a first identifier and a target identifier, and the first identifier being associated with the first effect.

The display unit 1006 is configured to display, in response to the first input, the second media content on the media content generation interface based on the target identifier being moved to a preset display position.

In the embodiments of the present disclosure, the user can adjust a display position of the target identifier in the identifier presentation region by performing the first input for the identifier presentation region. After the target identifier is moved to the preset display position, the operation of processing the original target media resource based on the new second effect is triggered, so as to obtain the second media content, and the second media content is displayed on the media content generation interface, thereby further simplifying the operation for the user to update the effect for the target media resource that has been configured with an effect.

In some embodiments of the present disclosure, the target identifier being moved to the preset display position includes: the target identifier at least partially overlapping a selected-state identifier displayed at the preset display position.

In the embodiments of the present disclosure, by displaying the selected-state identifier in a label presentation region, it is convenient for the user to determine the preset display position on the media content generation interface, enabling the user to conveniently move the target identifier to the preset display position. Moreover, the target media resource can be processed using the second effect once the target identifier partially overlaps the selected-state identifier, thereby further simplifying the operation steps for the user to trigger the update of the media effect, and reducing the occurrence of situations where user misoperations prevent timely triggering of effect updates.

In some embodiments of the present disclosure, the first input for the identifier presentation region is a swipe operation on the identifier presentation region.

In the embodiments of the present disclosure, the user performs the first input for the identifier presentation region by means of a swipe input, such that the movement direction of the identifier display position in the identifier presentation region is the same as the swipe direction, thereby further simplifying the operation process for the user.

In some embodiments of the present disclosure, the user input unit 1007 is configured to receive a second input for the first identifier or an edit control associated with the first identifier.

The display unit 1006 is configured to display an effect editing interface in response to the second input, where the effect editing interface includes a style control and a keyword input control, where the style control is used to determine an effect style of the first effect, and the keyword input control is used to update an effect keyword of the first effect.

In the embodiments of the present disclosure, by performing the second input for the first identifier on the media content generation interface, the user can trigger a navigation to and display of the effect editing interface, and the user can edit the first effect corresponding to the first identifier on the effect editing interface. This allows the user to quickly navigate to the effect editing interface from the media content generation interface when the user needs to update the existing effect, thereby simplifying the operation for the user to edit the existing effect.

In some embodiments of the present disclosure, the display unit 1006 is configured to display at least one second identifier on the media content generation interface in response to the first input, where the second identifier is associated with the second effect.

In the embodiments of the present disclosure, during the display of the post-update second media content, the media content generation interface displays the second identifier matching the second effect, enabling the user to keep abreast of the effect corresponding to the current second media content through the second identifier, navigate to an interface for editing the second effect through the second identifier, and trigger an operation of re-updating the effect for the second media content through the second identifier.

In some embodiments of the present disclosure, the display unit 1006 is configured to add display of the at least one second identifier on the media content generation interface.

The display unit 1006 is configured to cancel display of the first identifier on the media content generation interface and switch to display of the at least one second identifier.

In the embodiments of the present disclosure, by adding the display of the at least one second identifier on the basis of retention of the display of the original first identifier, the user can trigger the first identifier to invoke the corresponding first media content, and trigger the second identifier to invoke the corresponding second media content. That is, with the media content generation interface displaying the second media content, the first media content and the corresponding first identifier are retained, which facilitates subsequent invocation by the user at any time.

In the embodiments of the present disclosure, by canceling the display of the original first identifier and switching to the display of the at least one second identifier, the user can only trigger the second identifier to invoke the corresponding second media content. That is, with the media content generation interface displaying the second media content, the first media content is deleted, and the display of the corresponding first identifier is canceled. This allows the pre-update media content to be deleted conveniently, and the identifier displayed on the media generation interface to be deleted in a timely manner, resulting in a more concise layout on the media generation interface.

In some embodiments of the present disclosure, the display unit 1006 is configured to display the first identifier on the media content generation interface.

The user input unit 1007 is configured to receive a fourth input for the first identifier, where the first identifier is associated with the first effect.

The display unit 1006 is configured to display the first media content on the media content generation interface in response to the fourth input.

In the embodiments of the present disclosure, after the user updates the first media content to the second media content by updating the effect through the first input, the media content generation interface displays the first identifier. The user can trigger redisplay of the pre-update first media content on the media content generation interface through the first identifier. This allows the user to quickly retrieve the pre-update media content when the user is dissatisfied with the second media content.

In some embodiments of the present disclosure, the second effect matches the first effect in style category.

In the embodiments of the present disclosure, the first effect and the second effect are effects of the same style category, such that the user can conveniently switch from the first media content to the second media content of the matching style.

In some embodiments of the present disclosure, the second effect is different from the first effect in stylization intensity.

In the embodiments of the present disclosure, the first effect matches the second effect in style category, and the first effect is different from the second effect in stylization intensity, such that the user can conveniently switch from the first media content to the second media content of the same style but different stylization intensity, that is, the user can quickly adjust the stylization intensity used for processing the target media resource.

In some embodiments of the present disclosure, a determination module is configured to determine a second style category and a preset keyword for the second effect.

The processor 1010 is configured to generate the second effect based on the second style category and the preset keyword.

The processor 1010 is configured to generate and display the second media content based on the second effect and the target media resource.

In the embodiments of the present disclosure, by performing the first input for the media content generation interface, the user can trigger actions of generating the second effect and processing the target media resource based on the second effect, without requiring the user to exit the current interface for operation, thereby further simplifying user operations.

In some embodiments of the present disclosure, the second style category is the same as a first style category of the first effect, and/or the second style category is determined randomly.

In the embodiments of the present disclosure, in a case where the second style category is the same as the first style category, the corresponding second effect is generated by adjusting the preset keyword corresponding to the second effect, such that an effect style of the second media content is similar to the effect style of the first media content.

In the embodiments of the present disclosure, in a case where the second style category is determined randomly, the system may randomly select any one of the existing style categories as the second style category for generating the second effect. This allows the user to quickly generate the second media content of an effect style that differs significantly from the effect style of the first media content.

In some embodiments of the present disclosure, the display unit 1006 is configured to display the target media resource and a progress display control on the media content generation interface in response to the first input, where the progress display control is used to display a generation progress of the second media content.

The display unit 1006 is configured to switch to display of the second media content on the media content generation interface in response to the progress display control being displayed in a preset state.

In the embodiments of the present disclosure, during the generation of the second media content, the media content generation interface displays the original target media resource and the progress display control, so as to inform the user in a timely manner of detailed current progress of generation of the second media content.

It should be understood that in the embodiments of the present disclosure, the input unit 1004 may include a graphics processing unit (GPU) 10041 and a microphone 10042. The graphics processing unit 10041 processes image data of static pictures or videos obtained by an image capture apparatus (such as a camera) in a video capture mode or an image capture mode. The display unit 1006 may include a display panel 10061. The display panel 10061 may be configured in the form of a liquid crystal display, an organic light emitting diode, or the like. The user input unit 1007 includes at least one of a touch panel 10071 or other input devices 10072. The touch panel 10071 is also referred to as a touch screen. The touch panel 10071 may include two parts, namely, a touch detection apparatus and a touch controller. The other input devices 10072 may include, but are not limited to, a physical keyboard, a function key (such as a volume control button, or a switch button), a trackball, a mouse, and a joystick. Details are not described herein again.

The memory 1009 may be configured to store a software program and various types of data. The memory 1009 may mainly include a first storage area storing a program or instructions and a second storage area storing data. The first storage area may store an operating system, an application or instructions required by at least one function (such as an audio playback function, or an image playback function), or the like. In addition, the memory 1009 may include a volatile memory or a non-volatile memory, or the memory 1009 may include both the volatile memory and the non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random-access memory (RAM), a static RAM (SRAM), a dynamic RAM (DRAM), a synchronous DRAM (SDRAM), a double data rate SDRAM (DDRSDRAM), an enhanced SDRAM (ESDRAM), a synch link DRAM (SLDRAM), or a direct Rambus RAM (DRRAM). The memory 1009 in the embodiments of the present disclosure includes, but is not limited to, these and any other suitable types of memories.

The processor 1010 may include one or more processing units. Optionally, the processor 1010 integrates an application processor and a modem processor. The application processor mainly handles operations involving an operating system, a user interface, an application, or the like, and the modem processor mainly handles wireless communication signals, e.g., a baseband processor. It is understood that the modem processor described above may not be integrated into the processor 1010.

An embodiment of the present disclosure further provides a readable storage medium having a program or instructions stored thereon, where the program or instructions, when executed by a processor, cause various processes of the embodiments of the media content generation method described above to be implemented, and can achieve the same technical effects. In order to avoid repetition, details are not described herein again.

The processor is the processor in the electronic device in the above-mentioned embodiments. The readable storage medium includes a computer readable storage medium, such as a computer read-only memory (ROM), a random-access memory (RAM), a magnetic disk, or an optical disk.

An embodiment of the present disclosure further provides a chip. The chip includes a processor and a communication interface, where the communication interface is coupled to the processor, and the processor is configured to execute a program or instructions to implement various processes of the embodiments of the media content generation method described above, and can achieve the same technical effects. In order to avoid repetition, details are not described herein again.

It should be understood that the chip referred to in this embodiment of the present disclosure may also be referred to as a system-on-chip, a system chip, a chip system, an on-chip system, or the like.

An embodiment of the present disclosure provides a computer program product stored in a storage medium, where the program product, when executed by at least one processor, causes various processes of the embodiments of the media content generation method described above to be implemented, and can achieve the same technical effects. In order to avoid repetition, details are not described herein again.

It should be noted that the terms "include", "comprise", or any other variants thereof herein are intended to cover a non-exclusive inclusion, such that a process, a method, an article, or an apparatus that includes a list of elements not only includes those elements, but also includes other elements that are not explicitly listed, or further includes elements that are inherent to such a process, method, article, or apparatus. In the absence of more restrictions, an element defined by "including a ..." does not exclude another same element in a process, method, article, or apparatus that includes the element. Furthermore, it should be noted that the scope of the method and apparatus in the implementations of the present disclosure is not limited to performing functions in the order shown or discussed, but may also include performing functions substantially concurrently or in a reverse order, depending on the functions involved. For example, the described method may be performed in an order different from that described, and various steps may be added, omitted, or combined. In addition, features described with reference to some examples may be combined in other examples.

According to the foregoing descriptions of the implementations, those skilled in the art can clearly understand that the method in the above-mentioned embodiments may be implemented by using software plus a necessary universal hardware platform, or certainly, the method may be implemented by using hardware, but in many cases, the former is a preferred implementation. Based on such an understanding, the technical solutions of the present disclosure may be embodied in the form of a computer software product. The computer software product is stored in a storage medium (such as ROM/RAM, a magnetic disk, or an optical disk), and includes a plurality of instructions for instructing a terminal device (which may be a mobile phone, a computer, a server, a network device, or the like) to perform the method of the embodiments of the present disclosure.

The embodiments of the present disclosure have been described above with reference to the accompanying drawings. However, the present disclosure is not limited to the detailed description described above. The detailed description described above is merely illustrative and not restrictive. Those of ordinary skill in the art may, upon the teachings of the present disclosure, derive many variations without departing from the spirit of the present disclosure and the claimed scope of the claims, all of which fall within the protection of the present disclosure.

## Claims

1. A media content generation method, comprising:
displaying first media content on a media content generation interface;
generating a second effect in response to a first input for the media content generation interface, wherein the first media content is media content obtained by processing a target media resource based on a first effect; and
displaying second media content on the media content generation interface, wherein the second media content is media content obtained by processing the target media resource based on the second effect.

2. The media content generation method according to claim 1, wherein generating the second effect in response to the first input comprises:
generating the second effect based on at least one preset keyword in response to the first input, wherein the preset keyword is a keyword configured to generate the first effect.

3. The media content generation method according to claim 2, wherein the preset keyword is configured by a current user through an input operation.

4. The media content generation method according to claim 1, wherein receiving the first input for the media content generation interface comprises:
receiving the first input for an identifier presentation region, wherein the first input is configured to update an identifier display position within the identifier presentation region, and the identifier presentation region is configured to display an identifier set, the identifier set comprising a first identifier and a target identifier, and the first identifier being associated with the first effect; and
generating the second effect and displaying the second media content on the media content generation interface in response to the first input comprises:
displaying, in response to the first input, the second media content on the media content generation interface based on the target identifier being moved to a preset display position.

5. The media content generation method according to claim 4, wherein the target identifier being moved to the preset display position comprises: the target identifier at least partially overlapping a selected-state identifier displayed at the preset display position.

6. The media content generation method according to claim 4, wherein the first input for the identifier presentation region is a swipe operation on the identifier presentation region.

7. The media content generation method according to claim 4, further comprising:
receiving a second input for the first identifier or an edit control associated with the first identifier; and
displaying an effect editing interface in response to the second input, wherein the effect editing interface comprises a style control and a keyword input control,
wherein the style control is configured to determine an effect style of the first effect, and the keyword input control is configured to update an effect keyword of the first effect.

8. The media content generation method according to claim 1, wherein during the process of displaying the second media content on the media content generation interface in response to the first input, the method comprises:
generating the second effect and displaying at least one second identifier on the media content generation interface in response to the first input, wherein the second identifier is associated with the second effect.

9. The media content generation method according to claim 8, wherein displaying the at least one second identifier on the media content generation interface comprises at least one of:
adding display of the at least one second identifier on the media content generation interface; or
canceling display of a first identifier on the media content generation interface, and switching to display of the at least one second identifier.

10. The media content generation method according to claim 1, wherein after generating the second effect and displaying the second media content on the media content generation interface in response to the first input, the method further comprises:
displaying a first identifier on the media content generation interface;
receiving a fourth input for the first identifier, wherein the first identifier is associated with the first effect; and
displaying the first media content on the media content generation interface in response to the fourth input.

11. The media content generation method according to claim 1, wherein the second effect matches the first effect in style category.

12. The media content generation method according to claim 11, wherein the second effect is different from the first effect in stylization intensity.

13. The media content generation method according to claim 1, wherein generating the second effect and displaying the second media content on the media content generation interface in response to the first input comprises:
determining a second style category and a preset keyword for the second effect;
generating the second effect based on the second style category and the preset keyword; and
generating and displaying the second media content based on the second effect and the target media resource.

14. The media content generation method according to claim 13, wherein the second style category is the same as a first style category of the first effect, and/or the second style category is determined randomly.

15. The media content generation method according to any one of claims 1 to 14, wherein generating the second effect and displaying the second media content on the media content generation interface in response to the first input comprises:
displaying, in response to the first input, the target media resource and a progress display control on the media content generation interface, wherein the progress display control is configured to display a generation progress of the second media content; and
switching to display of the second media content on the media content generation interface in response to the progress display control being displayed in a preset state.

16. A media content generation apparatus, comprising:
a display module configured to display first media content on a media content generation interface;
a receiving module configured to receive a first input for the media content generation interface, wherein the first media content is media content obtained by processing a target media resource based on a first effect; and
a generation module configured to generate a second effect in response to the first input, wherein
the display module is configured to display second media content on the media content generation interface, wherein the second media content is media content obtained by processing the target media resource based on the second effect.

17. An electronic device, comprising:
a processor and a memory, wherein the memory stores a program or instructions executable on the processor that, when executed by the processor, cause the method according to any one of claims 1 to 15 to be implemented.

18. A readable storage medium having a program or instructions stored thereon that, when executed by a processor, cause the method according to any one of claims 1 to 15 to be implemented.
